# EUROPEAN PATENT APPLICATION

(11) **EP 1 053 960 A1**
(43) Date of publication of application: **22.11.2000**
(21) Application number: 00650054.0
(22) Date of filing: 19.05.2000
(51) Int. Cl.: B65G 69/00

(54) **Vehicle restraint**

(30) Priority: 19.05.1999 GB 9911590
(71) Applicant: Fortress Industries Limited, Newtownabbey, County Antrim BT36 4TY, Northern Ireland (GB)
(72) Inventor: Rodgers, Gavyn Hugh, Newtownabbey, BT36 4TY, County Antrim,NI (GB)
(74) Representative: McCarthy, Denis Alexis

(57) **Abstract**

A vehicle restraint comprises an elongate housing (10) in which a rod (12), captive to axial movement, is journalled in supports (14) for rotational movement. The rod (12) has a screw-threaded portion. Power means are provided at one end of the rod (12) to impart, when energised, rotational movement to the rod (12). A sleeve (22) has a tapped portion (23) carried in threaded engagement on the rod (12) and movable along the rod (12) on rotation thereof. The sleeve (22) has diametrically opposed bearing pins (24). A cam (34) has two walls (36) of substantial parallelogram shape with each wall (36) having a slot (38) at or near the transition between two adjacent sides (40) having an obtuse angle therebetween. The walls (40) are positioned one on each side of the sleeve (22) with the pins (24) entering respective slots (38) in the walls (40). The connection of the cam (34) to the sleeve (22) is rearward in each direction of travel. A restraint lever arm (46) is fast with the cam (34) and extends laterally from the housing (10).

## Description

This invention relates to a vehicle restraint for use at a loading bay or dock and, in use, serves to prevent a parked vehicle from moving from its parked position. Normally, a vehicle is reversed into a loading bay and has its rear door tight up against the bay. The gap between the floor of the vehicle and the platform of the loading bay is normally bridged by a dock leveller. Thereat the level of the floor of the truck and the loading bay is substantially the same. The passage of trucks, for example fork-lift trucks and pallet trucks, between the inside of the vehicle and the floor of the loading bay to load or unload the vehicle is straightforward. Sometimes however, without a restraint, the vehicle may move away from the loading bay. This may be for example caused by brake failure, or simply creep or slippage caused by movement of the truck brought about by the loading/unloading operation. When a gap does develop during loading or unloading operations between the floor of the truck and the platform of the loading bay, accidents can happen. Vehicles such as fork-lift trucks and pallet trucks may slip or fall into the gap, causing damage to vehicles and loading bay equipment, damage to goods, and injury or death to operators and other personnel. This is disadvantageous.

An object of the present invention is to obviate or mitigate this disadvantage.

Accordingly, the present invention is a vehicle restraint comprising an elongate housing in which a rod, captive to axial movement, is journalled in supports for rotational movement, the rod having a screw-threaded portion, power means at one end of the rod to impart, when energised, rotational movement to the rod, a sleeve having a tapped portion being carried in threaded engagement on the rod and movable along the rod on rotation thereof, the sleeve having diametrically opposed bearing pins, a cam having two walls of substantial parallelogram shape with each wall having a slot at or near the transition between two adjacent sides having an obtuse angle therebetween, the walls being positioned one on each side of the sleeve with the pins entering respective slots in the walls, the connection of the cam to the sleeve being rearward in each direction of travel, a restraint lever arm being fast with the cam and extending laterally from the housing.

Preferably, the sleeve has an axial untapped passage through which the rod passes, and the tapped portion is provided in a bush inserted into a bore at right angles to the sleeve's axis and extending through the passage, the bush having a cross passage with similar dimensions to the passage and being aligned with it.

Preferably, also, the housing is of the channel C-shape with the open side arranged, in use, to face inward of the passage leading to a loading bay. The power means is desirably mounted exteriorly of the housing.

Preferably also, the slot in the cam lies on a line extending from the centre of its respective wall and bisecting the obtuse angle. The cam beneficially has a rim of similar shape to its walls and extending outwardly from the wall nearer to the open side, the opposite sides of the rim running along the edges of the housing at each side of the open side.

Preferably further, the arm is of wedge shape and extends outwardly from the cam, the arm having a straight bottom and a top face tapering downwardly to meet the outer end of the bottom.

An embodiment of the present invention will now be described, by way of example, with reference to the accompanying drawings, in which:-
Fig. 1 shows a side view of a vehicle restraint according to the present invention with a lever arm level with part of the restraint cut-away for clarity;
Fig. 2 shows a cross-sectional view of the restraint on lines II-II of Fig. 1;
Fig. 3 shows a side view of a part of the restraint with the lever arm raised with part of the restraint cut-away for clarity;
Fig. 4 shows across-sectional view of the restraint on lines IV-IV of Fig. 3

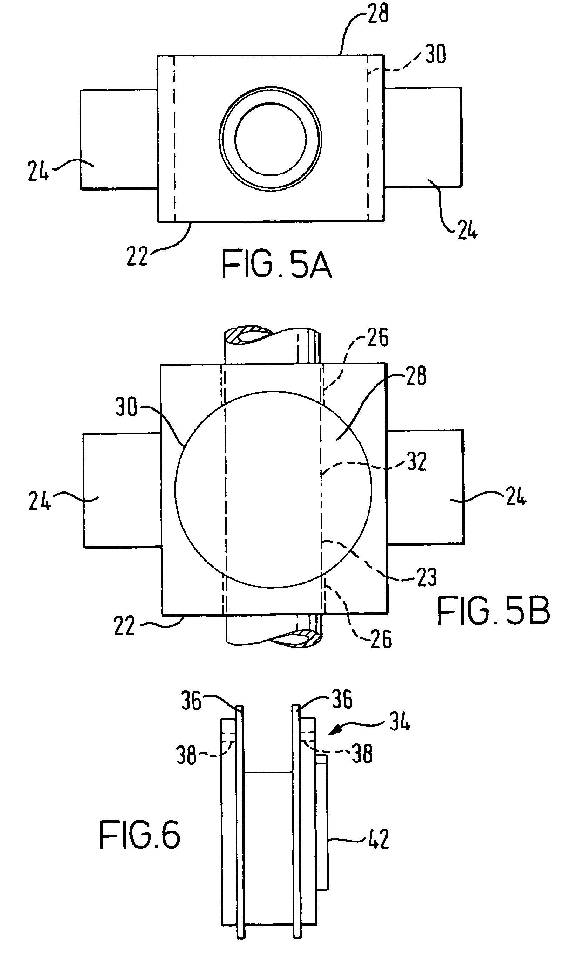

Figs. 5A and 5B show respectively an end view and a plan view of a sleeve of the restraint to a larger scale; and
Fig. 6 shows an end view of a cam of the restraint to a different scale.

Referring to the drawings, a vehicle restraint comprises an elongate housing 10 in which a rod 12, captive to axial movement, is journalled in supports 14 for rotational movement. The rod 12 has a screw-threaded portion. The housing 10 is of channel C-shape with the open side arranged, in use, to face inward of the passage leading to a loading bay. Power means is provided at one end of the rod 12 to impart, when energised, rotational movement to the rod 12. The power means is mounted exteriorly of the housing 10 and comprises a motor 16, a gearbox 18 and a coupling 20.

A sleeve 22 has a tapped portion 23 and is carried in threaded engagement on the rod 12 and movable along the rod 12 on rotation thereof. The sleeve 22 has diametrically opposite bearing pins 24. The sleeve 22 has an axial untapped passage 26 through which the rod 12 passes, and the tapped portion 23 is provided in a bush 28 inserted into a bore 30 at right angles to the sleeve's axis and extending through the passage 26. The bush 28 has a cross passage 32 with similar dimensions to the passage 26 with which it is aligned.

A cam 34 has two walls 36 of substantial parallelogram shape with each wall 36 having a slot 38 at or near to the transition between two adjacent sides 40 having an obtuse angle therebetween. The walls 36 are positioned on each side of the sleeve 22 with the pins 24 entering respective slots 38 in the walls 36. The connection of the cam 34 to the sleeve 22 is rearward in each direction of travel. The slots in the walls 36 of the cam 34 lie on a line extending from the centre of its respective wall 36 and bisecting the obtuse angle. The cam 34 has a rim 42 of similar shape to its walls 36 but of smaller dimensions and extends outwardly from the wall 36 nearer to the open side of the housing 10. The opposite sides of the rim 42 track and run along the top and bottom edges 44 of the housing 10 of the open side.

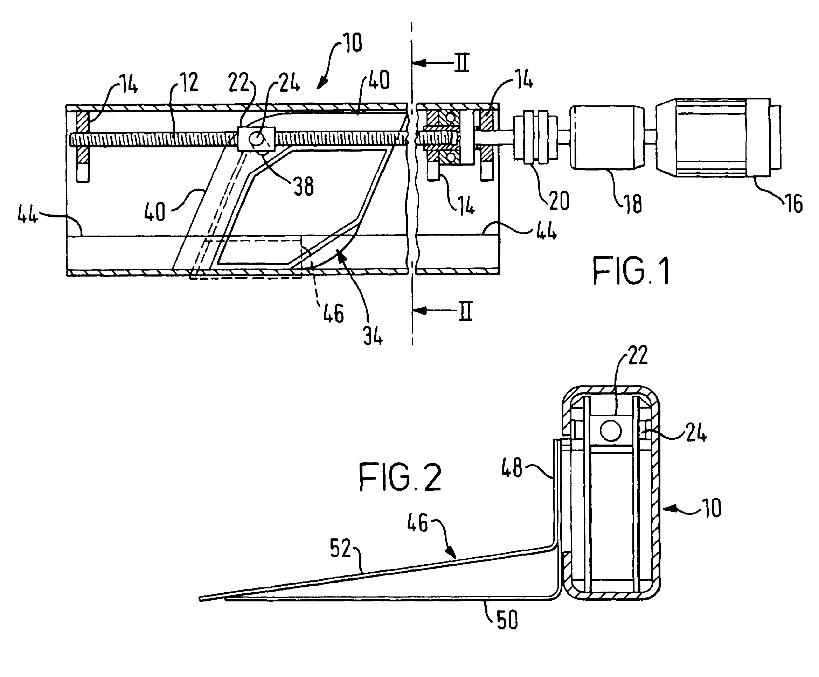

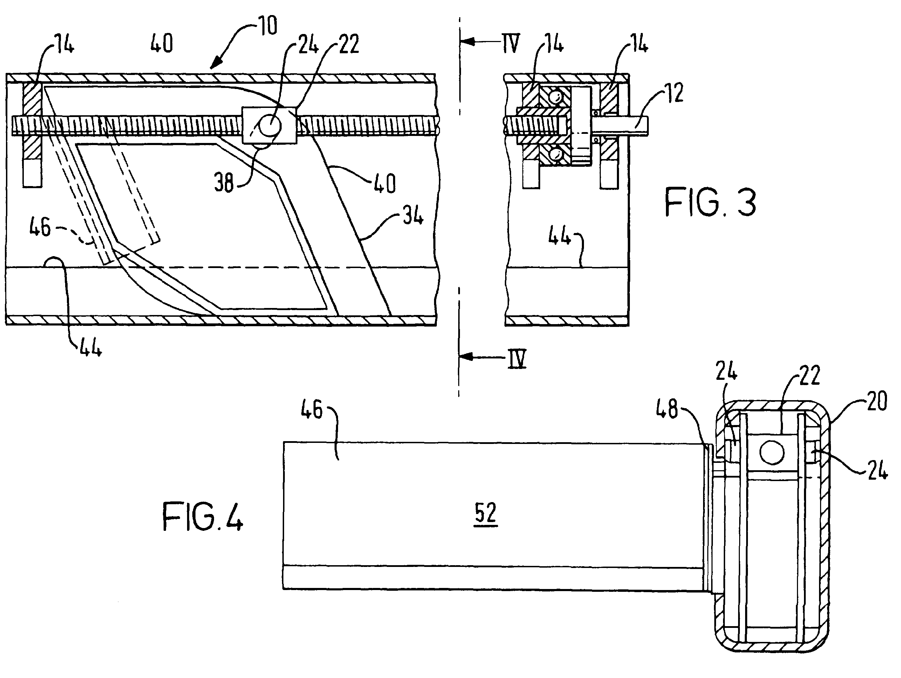

A restraint lever arm 46 is fast with the cam 34 through plate 48 and extends laterally from the housing 10 as shown in Figs. 2 and 4. The arm 46 is generally of wedge shape and extends outwardly from the cam 34. The arm 46 has a straight bottom 50 and a top face 52 tapering downwardly to meet the outer end of the bottom 48.

With a vehicle restraint fitted laterally of a passage leading to a loading bay in the above manner (only one restraint on one side of the vehicle is required), a vehicle is reversed towards the bay and is driven over the arm 46 which is in its level lowered position. After the rear door of the vehicle is tight against the bay, the motor 16 is energised and the rod 12 is rotated causing the sleeve 22 to move along the rod 12. This action causes the cam 34 and the arm 46 to be moved forward towards the front wheel of the vehicle. This movement causes the cam 34 to rotate about the pins 24 approximately through about 60°. Cam movement is constrained due to its shape and its location within the housing. The action of rotation of the cam 34 simultaneously rotates the lever arm 46 into its raised position as shown in Fig. 4

Continued forward movement of the cam 34 brings the lever arm 46 into contact with a wheel of the vehicle thereby to restrain it from moving. On reversing the motor drive, the rod 12 counter-rotates causing the cam 34 to rotate back through 60° and simultaneously rotating the lever arm 46 from its raised to its lowered position as it moves away from the wheel. Further rotation of the drive shaft moves the sleeve, the cam and the arm further away from the wheel.

Variations and modifications can be made without departing from the scope of the invention described above and as claimed hereafter.

## Claims

1. A vehicle restraint comprising an elongate housing in which a rod, captive to axial movement, is journalled in supports for rotational movement, the rod having a screw-threaded portion, power means at one end of the rod to impart, when energised, rotational movement to the rod, a sleeve having a tapped portion being carried in threaded engagement on the rod and movable along the rod on rotation thereof, the sleeve having diametrically opposed bearing pins, a cam having two walls of substantial parallelogram shape with each wall having a slot at or near the transition between two adjacent sides having an obtuse angle therebetween, the walls being positioned one on each side of the sleeve with the pins entering respective slots in the walls, the connection of the cam to the sleeve being rearward in each direction of travel, a restraint lever arm being fast with the cam and extending laterally from the housing.

2. A vehicle restraint as claimed in Claim 1, wherein the sleeve has an axial untapped passage through which the rod passes, and the tapped portion is provided in a bush inserted into a bore at right angles to the sleeve's axis and extending through the passage, the bush having a cross passage with similar dimensions to the passage and being aligned with it.

3. A vehicle restraint as claimed in Claim 1 or 2, wherein the housing is of channel C-shape with the open side arranged, in use, to face inward of a passageway leading to a loading bay.

4. A vehicle restraint as claimed in Claim 3, wherein the power means is mounted exteriorly of the housing.

5. A vehicle restraint as claimed in Claims 1, 2, 3 or 4, wherein the slot in the cam lies on a line extending from the centre of its respective wall and bisecting the obtuse angle.

6. A vehicle restraint as claimed in Claims 3, 4 or 5, wherein the cam has a rim of similar shape to its walls and extending outwardly from the wall nearer to the open side, the opposite sides of the rim running along the edges of the housing at each side of the open side.

7. A vehicle restraint as claimed in any one of the preceding Claims, wherein the arm is of wedge shape and extends outwardly from the cam, the arm having a straight bottom and a top face tapering downwardly to meet the outer end of the bottom.
